# EUROPÄISCHE PATENTSCHRIFT

(11) **EP 1 054 030 B1**
(45) Veröffentlichungstag und Bekanntmachung des Hinweises auf die Patenterteilung: **04.12.2002**
(21) Anmeldenummer: 00108708.9
(22) Anmeldetag: 22.04.2000
(51) Int. Cl.: C08G 18/08, C08G 18/66, C08G 18/72

(54) **Lineare Oligo- und Polyurethane mit definierter Struktur, ihre Herstellung und ihre Verwendung**
Linear oligo- and polyurethanes having defined structure, their manufacture and uses
Oligo- et polyuréthanes lineaires et de structure defini, leur préparation et utilisation

(30) Priorität: 08.05.1999 DE 19921412
(43) Veröffentlichungstag der Anmeldung: 22.11.2000
(73) Patentinhaber: BASF AKTIENGESELLSCHAFT, 67056 Ludwigshafen (DE)
(72) Erfinder: Bruchmann, Bernd, Dr., 67251 Freinsheim (DE); Servay, Thomas, Dr., 67550 Worms (DE); Treuling, Ulrich, Dr., 64625 Bensheim (DE)

(56) Entgegenhaltungen:
- EP-A- 0 150 444
- EP-A- 0 634 432
- EP-A- 0 696 604

## Beschreibung

Die Erfindung bezieht sich lineare Oligo- und Polyurethane mit definierter Struktur, Verfahren zur ihrer Herstellung sowie ihre Verwendung.

Lineare Polyurethane sind in der Regel thermoplastisch verarbeitbar und werden daher allgemein als Thermoplastische Polyurethane (TPU) bezeichnet. TPU sind kristalline oder teilkristalline Werkstoffe und gehören zu der Klasse der thermoplastischen Elastomere. Sie zeichnen sich aus durch eine Kombination von vorteilhaften Stoffeigenschaften, wie beispielsweise einem geringen Abrieb, einer guten Chemikalienbeständigkeit sowie einer hohen Flexibilität bei gleichzeitig einer hohen Festigkeit mit den Vorteilen der kostengünstigen Herstellung, die kontinuierlich oder diskontinuierlich nach verschiedenen bekannten Verfahren, beispielsweise dem Band- oder dem Extruderverfahren, durchgeführt werden kann. Eine Übersicht über TPU, ihre Eigenschaften und Anwendungen wird z.B. im "Kunststoff-Handbuch", Band 7, Polyurethane, 3. Auflage, 1993, herausgegeben von G. Oertel, Carl Hanser Verlag, München, gegeben.

Die Herstellung der TPU erfolgt im allgemeinen durch Umsetzung von Diisocyanaten mit Verbindungen mit zwei mit Isocyanatgruppen reaktiven Gruppen, zumeist difunktionellen Alkoholen. Als difunktionelle Alkohole kommen zum einen solche mit Molekulargewichten größer 400, insbesondere größer 1000, zum Einsatz. Beispiele hierfür sind Polyetherole und Polyesterole. Diese höhermolekularen Alkoholkomponenten bilden die sogenannte Weichphase. Außerdem werden niedermolekulare Alkohole, sogenannte Kettenverlängerer, eingesetzt. Dabei handelt es sich zumeist um zweifunktionelle Alkohole mit einem Molekulargewicht im Bereich zwischen 62 und 400.

Nähere Angaben über die oben genannten Einsatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem vorgenannten Kunststoff-Handbuch, Band XII, Polyurethane, oder der DE-OS 29 01 774 zu entnehmen.

Die üblicherweise zur Herstellung von TPU verwendeten Isocyanate reagieren bei den genannten Herstellprozessen gegenüber den eingesetzten Polyolen und Kettenverlängerer nicht selektiv, so daß bei der Reaktion eine statistische Verteilung von Polyurethanen aus kurzkettigen und langkettigen Alkoholen entsteht. Langkettige Diole ergeben, wie ausgeführt, nach der Umsetzung mit den Diisocyanaten die Weichphase des TPU, während die Urethane aus den Kettenverlängerern die Hartphasen bilden.

Unter bestimmten Voraussetzungen kann es für die Eigenschaften der linearen Polyurethane jedoch vorteilhaft sein, definierte Strukturen zu erzeugen. Beispielsweise kann es Vorteile bieten, wenn man oligomere oder polymere Hartphasenblöcke mit entsprechenden Weichphasenblöcken kombiniert, was bei einer statistischen, d.h. nicht steuerbaren, Verteilung von Hartund Weichphasen in den herkömmlichen Prozessen nicht gelingt.

Aufgabe der Erfindung war es daher, ein einfaches Verfahren zu finden, mit dem definiert aufgebaute lineare Oligo- und Polyurethane aus handelsüblichen Rohstoffen hergestellt werden können.

Diese Aufgabe konnte überraschenderweise gelöst werden, indem Unterschiede in der Reaktivität der Isocyanatgruppen von vorzugsweise Diisocyanaten beziehungsweise Unterschiede in der Reaktivität der funktionellen Gruppen der mit Isocyanaten reaktiven Verbindungen ausgenutzt werden, um einen selektiven Segmentaufbau der Polymere zu steuern.

Gegenstand der Erfindung ist demzufolge ein Verfahren zur Herstellung von linearen Oligo- und Polyurethanen durch Umsetzung von Diisocyanaten a) mit Verbindungen mit vorzugsweise zwei mit Isocyanaten reaktiven Gruppen b), dadurch gekennzeichnet, dass a) und/oder b) funktionelle Gruppen mit gegenüber den funktionellen Gruppen des anderen Reaktionspartners unterschiedlicher Reaktivität aufweisen und die Reaktionsbedingungen so gewählt werden, dass bei jedem Reaktionsschritt jeweils bestimmte reaktive Gruppen miteinander reagieren.

Gegenstand der Erfindung sind weiterhin die nach diesem Verfahren hergestellten Oligo- und Polyurethane.

Vorzugsweise werden jeweils die Gruppen der Verbindungen a) und b) miteinander reagieren, die die höhere Reaktivität aufweisen.

Als Oligourethane werden hierbei Verbindungen mit mindestens einer Urethangruppe, im einfachsten Fall Reaktionsprodukte aus einem Mol eines Diisocyanats und einem Mol einer Verbindung mit zwei mit Isocyanatgruppen reaktiven Gruppen, und einem Molekulargewicht Mₙ bis 2000 g/mol verstanden. Als Polyurethane werden Verbindungen mit Molekulargewichten Mₙ größer 2000 g/mol verstanden.

An Stelle der oder zusätzlich zur Urethangruppe können die Oligo- und/oder Polyurethane auch Gruppen enthalten, die aus der Umsetzung von Isocyanatgruppen und Aminogruppen und/oder Mercaptogruppen resultieren.

Unter linearen Oligo- und Polyurethanen werden im Rahmen dieser Erfindung unvernetzte Makromoleküle mit Urethangruppen verstanden, die strukturell einheitlich aus Molekülen aufgebaut sind, die je eine funktionelle Gruppe A und eine funktionelle Gruppe B aufweisen mit der Maßgabe, dass A eine mit Isocyanatgruppen reaktive Gruppe und B eine Isocyanatgruppe ist. Die Moleküle mit den funktionellen Gruppen A und B werden in einer Vorreaktion erzeugt aus einem Mol eines Diisocyanats und einem Mol einer mit Isocyanat reaktiven, vorzugsweise difunktionellen Verbindung, wobei mindestens einer der beiden Reaktionspartner eine gegenüber dem anderen Reaktionspartner unterschiedliche Reaktivität in den funktionellen Gruppen aufweisen muß. Im Anschluß an die Vorreaktion werden die Moleküle mit den funktionellen Gruppen A und B intermolekular polymerisiert.

Unter linearen Oligo- und Polyurethanen werden im Sinne der Erfindung auch Moleküle verstanden, die einen geringen Grad an Verzweigung aufweisen können. Die Verzweigungen können durch Nebenreaktionen, z.B. durch Allophanat- oder Biuretbildung, hervorgerufen werden oder aber bewußt durch Zusatz von Reaktionspartnern mit einer Funktionalität grösser 2 eingeführt werden. Die Zusatzmenge von einem Reaktionspartner a) und/oder b) mit einer Funktionalität grösser 2 sollte bezogen auf die Gesamtmischung a) und b) 10 mol-% nicht überschreiten.

Ebenfalls möglich ist die Copolymerisation von Molekülen mit den funktionellen Gruppen A und B mit anderen Molekülen mit den funktionellen Gruppen A und B, wobei diese Moleküle entweder separat erzeugt werden oder durch Copolymerisation einer Reaktandenmischung in situ entstehen. Als Voraussetzung gilt hier, däss die Molekülpaare mit den funktionellen Gruppen A und B mit sich selbst reagieren können.

Als Isocyanate sind prinzipiell alle organischen Diisocyanate zur Herstellung der erfindungsgemäßen Produkte geeignet, bevorzugt eingesetzt werden 4,4'-Diphenylmethandiisocyanat (4,4'-MDI), Tetramethylendiisocyanat, Hexamethylendiisocyanat (HDI), Dodecyldiisocyanat (DDI), 4,4'-Methylenbis(cyclohexyl)isocyanat (4,4'-HMDI) oder 1,3- oder 1,4-Bis(isocyanatomethyl)cyclohexan (BIC).

Besonders bevorzugt sind jedoch Isocyanate mit NCO-Gruppen unterschiedlicher Reaktivität, z.B. aromatische Diisocyanate, wie 2,4-Toluylendiisocyanat (2,4-TDI), 2,4'-Diphenylmethandiisocyanat (2,4'-MDI), 3-Alkyl-4,4'-Diphenylmethan-diisocyanat, wobei der Alkylrest 1 bis 10 Kohlenstoffatome enthält, oder aliphatische Diisocyanate, wie Isophorondiisocyanat (IPDI), 2-Butyl-2-ethylpentamethylen-diisocyanat, 2-Isocyanatopropyl-cyclohexyl-isocyanat, Lysinalkylesterdiisocyanat, wobei Alkyl für C₁ bis C₁₀ steht, 2,4'-Methylenbis(cyclohexyl)isocyanat (2,4'-HMDI) und 4-Methyl-cyclohexan-1,3-diisocyanat (H-TDI).

Weiterhin sind Isocyanate besonders bevorzugt, deren NCO-Gruppen zunächst gleich reaktiv sind, bei denen sich jedoch durch Erstaddition eines Alkohols oder Amins an einer NCO-Gruppe ein Reaktivitätsabfall bei der zweiten NCO-Gruppe induzieren läßt. Beispiele dafür sind Isocyanate, deren NCO-Gruppen über ein elektronisches System gekoppelt sind, z.B. 1,3- und 1,4-Phenylendiisocyanat, 1,5-Naphthylendiisocyanat (NDI), Diphenyldiisocyanat, Tolidindiisocyanat oder 2,6-Toluylendiisocyanat (2,6-TDI). Natürlich können auch Mischungen der genannten Isocyanate verwendet werden.

Als Verbindungen mit zwei mit Isocyanaten reaktiven Gruppen werden vorzugsweise Verbindungen eingesetzt, deren funktionelle Gruppen sterisch oder elektronisch bedingt gegenüber NCO-Gruppen eine unterschiedliche Reaktivität aufweisen. Bevorzugt werden Verbindungen mit einer primären und einer sekundären oder tertiären Hydroxylgruppe, einer primären und einer sekundären oder tertiären Mercaptogruppe, einer primären und einer sekundären Aminogruppe, einer Hydroxylgruppe und einer Mercaptogruppe, einer Mercaptogruppe und einer Aminogruppe oder einer Hydroxylgruppe und einer Aminogruppe im Molekül eingesetzt.

Beispiele für die genannten Verbindungen mit mindestens zwei mit Isocyanaten reaktiven Gruppen sind Propylenglykol, 1,2-und 1,3-Butandiol, 1,2- und 1,3-Pentandiol, Propan-1,2-dithiol, Butan-1,2-dithiol, N-Methylhexamethylendiamin, Toluylendiamin, Isophorondiamin, Mercaptoethanol, 1-Mercaptopropanol-2, Mercaptobutanol, Cysteamin, Aminopropanthiol, Ethanolamin, Propanolamin, 2-(2'-Aminoethoxy)ethanol oder höhermolekulare Alkoxylierungsprodukte des Ammoniaks, N-Methylethanolamin, Isopropanolamin, 2-(Butylamino)-ethanol, 2-(Cyclohexylamino)ethanol, 2-Amino-1-butanol, 5-Aminopentanol-1, 6-Aminohexanol-1, 9-Aminodioxanonan-1-ol, 4-Hydroxypiperidin, 1-Hydroxyethylpiperazin, 2-Amino-2'-hydroxy-diethylsulfid oder 2-Amino-2'-hydroxydiethylsulfon.
Weiterhin sind auch Mischungen der genannten Verbindungen einsetzbar.

Um bei der Herstellung der linearen Oligo- oder Polyurethane genau definierte Strukturen zu erhalten ist es notwendig, zunächst ein Mol eines Diisocyanats ggf. mit unterschiedlich reaktiven NCO-Gruppen, mit einem Mol einer Verbindung mit mindestens zwei mit Isocyanatgruppen reaktiven Gruppen ggf. ebenfalls unterschiedlicher Reaktivität, wobei mindestens eine der beiden Verbindungen Gruppen mit unterschiedlicher Reaktivität aufweist, zu einer Verbindung des Typs A-B umzusetzen, die sowohl eine freie Isocyanatgruppe als auch eine freie mit Isocyanatgruppen reaktive Gruppe enthält. Durch Änderung der Reaktionsbedingungen, z.B. durch Erwärmung und/oder durch Katalysatorzugabe kann dieses Molekül dann intermolekular zu einem linearen, unverzweigten Oligo- oder Polyurethan aus definierten Blöcken (A-B) reagieren. Diese Blöcke A-B lassen sich ggf. kombinieren mit Blöcken A'-B, A-B' oder A'-B', das heißt Blöcken mit je einer freien Isocyanatgruppe und einer freien mit Isocyanatgruppen reaktiven Gruppe, die aus anderen Diisocyanaten bzw. Verbindungen mit mindestens zwei mit Isocyanatgruppen reaktiven Gruppen resultieren, die entweder separat hergestellt oder auch in situ aus anderen Aufbaukomponenten erzeugt werden können.

Die Reaktion des Molgewichtsaufbaus kann beendet werden durch Zugabe einer mit den reaktiven Gruppen der Reaktionspartner reaktiven Verbindung oder durch weiteren Zusatz eines der beiden Reaktionspartner. Die Reaktion kann jedoch auch bis nahezu zur vollständigen Abreaktion des Startmoleküls zur Erreichung sehr hochmolekularer Strukturen geführt werden.
Da das erfindungsgemäße lineare Oligo- oder Polyurethan Endgruppen unterschiedlicher Funktionalität besitzt, z.B. am einen Ende eine NCO-Gruppe und am anderen Ende eine OH-Gruppe, lassen sich die Moleküle durch den Vorgang des Abbrechens der intermolekularen Polymerisation je nach Wunsch funktionalisieren oder auch verzweigen. So lassen sich durch Abbruch mittels eines Diols oder eines Aminoalkohols oder eines Diamins Moleküle mit OH- oder NH-Endgruppen erzeugen, durch Zugabe eines Diisocyanats lassen sich NCO-Gruppen als Endgruppen einbauen. Diese z.B. OH-, NH- oder NCO-terminierten Oligomer- oder Polymerblöcke lassen sich mit konventionellen Bausteinen der Polyurethanchemie zu linearen oder verzweigten Strukturen höheren Molekulargewichts umsetzen. So lassen sich z.B. durch Zugabe eines Polyether- oder Polyesterdiols zu einem erfindungsgemäß NCO-terminierten linearen Polyurethan lineare thermoplastische Polyurethane erzeugen.

Durch Abbruch mittels Zugabe eines mehrfunktionellen Alkohols, Amins oder Isocyanats lassen sich auch sternförmige Moleküle erzeugen.

Falls erforderlich, lassen sich die funktionellen Endgruppen der erfindungsgemäßen linearen, unverzweigten Polyurethane auch modifizieren oder inertisieren.

NCO-terminierte Polymere können beispielsweise mit Fettalkoholen, Fettaminen oder Doppelbindungen enthaltenden Monoalkoholen, wie Allylalkohol, Vinylakohol, Hydroxyethylacrylat, Hydroxybutylacrylat oder Hydroxyethylmethacrylat ganz oder teilweise umgesetzt werden. Hydroxyl-, Mercaptan- oder Amin-terminierte Polymere lassen sich beispielsweise durch Umsetzung mit Monocarbonsäuren, beispielsweise Fettsäuren, oder Monoisocyanaten inertisieren, durch Acrylsäuren funktionalisieren, mit Dicarbonsäuren verestern oder durch Addition von Alkylenoxiden, wie Ethylenoxid, Propylenoxid und/oder Butylenoxid kettenverlängern.

Die Umsetzung kann dabei jeweils ohne Lösungsmittel, vorzugsweise jedoch in Lösung erfolgen. Als Lösungsmittel sind alle bei Umsetzungstemperatur flüssigen, gegenüber den Monomeren und den Endprodukten inerten Verbindungen geeignet.

Der Einsatz der erfindungsgemäßen linearen und unverzweigten Polyurethane erfolgt beispielsweise als Thermoplast, zur Herstellung von Thermoplasten, als Baustein zur Herstellung von Polyurethanen oder für andere Polyadditions- oder Polykondensationspolymere. Weitere Anwendungsmöglichkeiten sind in ihrem Einsatz als Phasenvermittler, Rheologiehilfsmittel, Thixotropiermittel, oder als Nukleierungsreagenzien zu sehen.

Das erfindungsgemäße Verfahren soll an den folgenden Beispielen näher erläutert werden.

### Beispiel 1: Herstellung eines linearen unverzweigten Polyurethans aus IPDI und Ethanolamin, OH-terminiert

44,2 g (0,2 mol) IPDI wurden in 100 ml getrocknetem Dimethylacetamid (DMAc) gelöst und auf -5°C abgekühlt. Bei dieser Temperatur wurden 12,2 g (0,2 mol) Ethanolamin, gelöst in 50 ml getrocknetem DMAc innerhalb 1h zugetropft. Der NCO-Gehalt der Mischung betrug 4,1 %. Das Produktgemisch wurde auf 60°C erwärmt und 3 ml einer 2%igen Lösung von Dibutylzinn-dilaurat (DBTL) in Tetrahydrofuran (THF) zugegeben. Der NCO-Gehalt der Mischung nahm mit dem Aufbau der Molmasse kontinuierlich ab. Bei einem NCO-Gehalt von 0,3 % wurde die Reaktion durch Zugabe von 1 g Ethanolamin, gelöst in 5 ml DMAc, beendet. Das Reaktionsprodukt wies eine OH-Funktionalität von 2 auf. Nach Entfernung des Lösemittels wurden folgende Parameter bestimmt:

| | |
|---|---|
| Hydroxylzahl: | 29 mg KOH/g |
| GPC-Analytik (PMMA-Eichung) | |
| Molmassen | |
| Mₙ: | 3818 g/mol |
| M_{w}: | 6490 g/mol |

### Beispiel 2: Herstellung eines linearen unverzweigten Polyurethans aus IPDI und 1,2-Propandiol, OH-terminiert

44,2 g (0,2 mol) IPDI wurden in 100 ml getrocknetem Dimethylacetamid (DMAc) gelöst und auf -10°C abgekühlt. Bei dieser Temperatur wurden 15,2 g (0,2 mol) 1,2-Propandiol, gelöst in 50 ml getrocknetem DMAc innerhalb 40 min zugetropft. Anschließend wird die Mischung auf 80°C erwärmt und die Abnahme des NCO-Gehaltes kontrolliert. Bei einem NCO-Gehalt von 0,25 % wurde die Reaktion durch Zugabe von 0,8 g Ethanolamin, gelöst in 5 ml DMAc, beendet. Das Reaktionsprodukt wies eine OH-Funktionalität von 2 auf. Nach Entfernung des Lösemittels wurden folgende Parameter bestimmt:

| | |
|---|---|
| Hydroxylzahl: | 24 mg KOH/g |
| GPC-Analytik (PMMA-Eichung) | |
| Molmassen | |
| Mₙ: | 4765 g/mol |
| M_{w}: | 8575 g/mol |

### Beispiel 3: Herstellung eines linearen unverzweigten Polyurethans aus 2,4-TDI und Ethanolamin, OH-terminiert

34,8 g (0,2 mol) TDI wurden in 100 ml getrocknetem Dimethylacetamid (DMAc) gelöst und auf -15°C abgekühlt. Bei dieser Temperatur wurden 12,2 g (0,2 mol) Ethanolamin, gelöst in 50 ml getrocknetem DMAc innerhalb 1h zugetropft. Der NCO-Gehalt der Mischung betrug 4,3 %. Das Produktgemisch wurde unter Rühren langsam auf Raumtemperatur (23°C) erwärmt, während der NCO-Gehalt der Mischung mit dem Aufbau der Molmasse kontinuierlich abnahm. Bei einem NCO-Gehalt von 0,5 % wurde die Reaktion durch Zugabe von 1,5 g Ethanolamin, gelöst in 5 ml DMAc, beendet. Das Reaktionsprodukt wies eine OH-Funktionalität von 2 auf. Nach Entfernung des Lösemittels wurden folgende Parameter bestimmt:

| | |
|---|---|
| Hydroxylzahl: | 52 mg KOH/g |
| GPC-Analytik (PMMA-Eichung) | |
| Molmassen | |
| Mₙ: | 2160 g/mol |
| M_{w}: | 3240 g/mol |

### Beispiel 4: Herstellung eines linearen unverzweigten Polyurethans aus IPDI und 2-(2'-Aminoethoxy)ethanol, NCO-terminiert

222 g (1 mol) IPDI wurden in 500 ml getrocknetem Dimethylacetamid (DMAc) gelöst und auf -5°C abgekühlt. Bei dieser Temperatur wurden 105 g (1 mol) 2-(2'-Amino-ethoxy)ethanol, gelöst in 250 ml getrocknetem DMAC innerhalb 2h zugetropft. Der NCO-Gehalt der Mischung betrug danach 4,0 %. Das Produktgemisch wurde auf 40°C erwärmt und 8 ml einer 2%igen Lösung von Dibutylzinn-dilaurat (DBTL) in DMAc zugegeben. Der NCO-Gehalt der Mischung nahm mit dem Aufbau der Molmasse kontinuierlich ab. Bei einem NCO-Gehalt von 0,6 % wurde die Reaktion durch Zugabe von 35 g IPDI beendet. Das Reaktionsprodukt wies eine NCO-Funktionalität von 2 auf. Nach Entfernung des Lösemittels wurden folgende Parameter bestimmt:

| | |
|---|---|
| NCO-Gehalt: | 3,7 % |
| GPC-Analytik (PMMA-Eichung) | |
| Molmassen | |
| Mₙ: | 2347 g/mol |
| M_{w}: | 3286 g/mol |

## Patentansprüche

1. Verfahren zur Herstellung von linearen Oligo- und Polyurethanen durch Umsetzung von 1 Mol a) Diisocyanaten mit 1 Mol b) Verbindungen mit zwei mit Isocyanaten reaktiven Gruppen, **dadurch gekennzeichnet, daß** die funktionellen Gruppen von a) und/oder b) gegenüber den funktionellen Gruppen des anderen Reaktionspartners unterschiedliche Reaktivitäten aufweisen und die Reaktionsbedingungen so gewählt werden, daß jeweils nur bestimmte funktionelle Gruppen von a) und b) miteinander reagieren, und die so entstandene Verbindung, die sowohl eine freie Isocyanatgruppe als auch eine freie mit Isocyanatgruppen reaktive Gruppe enthält, intermolekular zu einem Oligo- oder Polyurethan reagiert.

2. Verfahren zur Herstellung von linearen Oligo- und Polyurethanen nach Anspruch 1, **dadurch gekennzeichnet, daß** jeweils die Gruppen von a) und b) miteinander reagieren, die eine höhere Reaktivität aufweisen.

3. Verfahren zur Herstellung von linearen Oligo- und Polyurethanen nach Anspruch 1, **dadurch gekennzeichnet, daß** die Isocyanate mit mindestens zwei Isocyanatgruppen a) ausgewählt sind aus der Gruppe, enthaltend 2,4-Toluylendiisocyanat, 2, 6-Toluylendiisocyanat, 4,4'-Diphenylmethandiisocyanat, 2,4'-Diphenylmethandiisocyanat, 3-Alkyl-4,4'-Diphenylmethandiisocyanat, wobei Alkyl für C₁ bis C₁₀ steht, 1,3- und 1,4-Phenylendiisocyanat, 1,5-Naphthylendiisocyanat, Tolidindiisocyanat, Diphenyldiisocyanat, Tetramethylendiisocyanat, Hexamethylendiisocyanat, Dodecyldiisocyanat, Lysinalkylesterdiisocyanat, wobei Alkyl für C1 bis C10 steht, Isophorondiisocyanat, 2-Butyl-2-ethylpentamethylen-diisocyanat, 2-Isocyanatopropylcyclohexylisocyanat, 4-Methyl-cyclohexan-1,3-diisocyanat, 4,4'- und 2,4'-Methylenbis(cyclohexyl)diisocyanat, 1,3- oder 1,4-Bis (isocyanatomethyl)cyclohexan oder aus deren Mischungen.

4. Verfahren zur Herstellung von linearen Oligo- und Polyurethanen nach Anspruch 1, **dadurch gekennzeichnet, daß** die Verbindungen mit zwei mit Isocyanatgruppen reaktiven Gruppen Verbindungen b) mit einer primären und einer sekundären oder tertiären Hydroxylgruppe oder einer primären und einer sekundären oder tertiären Mercaptogruppe, einer primären und einer sekundären Aminogruppe, einer Hydroxylgruppe und einer Mercaptogruppe, einer Mercaptogruppe und einer Aminogruppe oder einer Hydroxylgruppe und einer Aminogruppe im Molekül sind.

5. Verfahren nach Anspruch 1 zur Herstellung von linearen Oligound Polyurethanen, **dadurch gekennzeichnet, daß** ein Mol eines Isocyanats a) mit einem Mol einer Verbindung mit zwei mit Isocyanatgruppen reaktiven Gruppen b) unterschiedlicher Reaktivität umgesetzt wird und die entstandene Verbindung, die sowohl eine freie Isocyanatgruppe als auch eine freie mit Isocyanatgruppen reaktive Gruppe enthält, intermolekular zu einem Oligo- oder Polyurethan reagiert.

6. Lineare Oligo- und Polyurethane, herstellbar nach einem der Ansprüche 1 bis 5.

7. Verwendung der linearen Oligo- und Polyurethane nach Anspruch 6 als Thermoplast.

8. Verwendung der linearen Oligo- und Polyurethane nach Anspruch 6 als Komponente zur Herstellung von Polyurethanen.

9. Verwendung der linearen Oligo- und Polyurethane nach Anspruch 6 als Komponente zur Herstellung von Polyadditionsoder Polykondensationspolymeren.

10. Verwendung der linearen Oligo- und Polyurethane nach Anspruch 6 als Komponente zur Herstellung von Stern- oder Kammpolymeren.

11. Verwendung der linearen Oligo- und Polyurethane nach Anspruch 6 als Phasenvermittler, Rheologiehilfsmittel, Thixotropiermittel oder Nukleierungsreagenzien.

## Claims

1. A process for preparing linear oligourethanes and polyurethanes by reacting 1 mole of a) diisocyanates with 1 mole of b) compounds having two groups which are reactive toward isocyanates, wherein the functional groups of a) and/or b) have differing reactivities toward the functional groups of the other reactant and the reaction conditions are selected so that in each case only particular functional groups of a) and b) react with one another and the resulting compound which contains both one free isocyanate group and one free group which is reactive toward isocyanates reacts intermolecularly to form an oligourethane or polyurethane.

2. A process for preparing linear oligourethanes and polyurethanes as claimed in claim 1, wherein the groups of higher reactivity in each of a) and b) react with one another.

3. A process for preparing linear oligourethanes and polyurethanes as claimed in claim 1, wherein the isocyanates having at least two isocyanate groups a) are selected from the group consisting of tolylene 2,4-diisocyanate, tolylene 2,6-diisocyanate, diphenylmethane 4,4'-diisocyanate, diphenylmethane 2,4'-diisocyanate, 3-alkyldiphenylmethane 4,4'-diisocyanate, where alkyl is from C₁ to C₁₀, phenylene 1,3- and 1,4-diisocyanate, naphthylene 1,5-diisocyanate, tolidine diisocyanate, biphenyl diisocyanate, tetramethylene diisocyanate, hexamethylene diisocyanate, dodecane diisocyanate, lysine alkyl ester diisocyanate, where alkyl is from C₁ to C₁₀, isophorone diisocyanate, 2-butyl-2-ethylpentamethylene diisocyanate, 2-isocyanatopropylcyclohexyl isocyanate, 4-methylcyclohexane 1,3-diisocyanate, dicyclohexylmethane 4,4'- and 2,4'-diisocyanate, 1,3- or 1,4-bis(isocyanatomethyl)cyclohexane and mixtures thereof.

4. A process for preparing linear oligourethanes and polyurethanes as claimed in claim 1, wherein the compounds having two groups which are reactive toward isocyanates are compounds b) having one primary and one secondary or tertiary hydroxyl group or one primary and one secondary or tertiary mercapto group, one primary and one secondary amino group, one hydroxyl group and one mercapto group, one mercapto group and one amino group or one hydroxyl group and one amino group in the molecule.

5. A process as claimed in claim 1 for preparing linear oligourethanes and polyurethanes, wherein one mole of an isocyanate a) is reacted with one mole of a compound b) having two groups which are reactive toward isocyanate groups and have differing reactivities and the resulting compound which contains both one free isocyanate group and one free group which is reactive toward isocyanates reacts intermolecularly to form an oligourethane or polyurethane.

6. A linear oligourethane or polyurethane which is able to be prepared as claimed in any of claims 1 to 5.

7. The use of a linear oligourethane or polyurethane as claimed in claim 6 as a thermoplastic.

8. The use of a linear oligourethane or polyurethane as claimed in claim 6 as a component for preparing polyurethanes.

9. The use of a linear oligourethane or polyurethane as claimed in claim 6 as a component for preparing polyaddition or polycondensation polymers.

10. The use of a linear oligourethane or polyurethane as claimed in claim 6 as a component for preparing star or comb polymers.

11. The use of a linear oligourethane or polyurethane as claimed in claim 6 as phase compatibilizer, rheological auxiliary, thixotrope or nucleating reagent.

## Revendications

1. Procédé pour la préparation d'oligo- et de poly-uréthanes linéaires par mise en réaction de 1 mole a) de diisocyanates avec 1 mole b) de composés comprenant deux groupes réactifs vis-à-vis d'isocyanates, **caractérisé en ce que** les groupes fonctionnels de a) et/ou b) présentent des réactivités différentes vis-à-vis des groupes fonctionnels de l'autre partenaire réactionnel et les conditions de la réaction sont sélectionnées de telle sorte que, respectivement seuls des groupes fonctionnels déterminés de a) et de b) réagissent les uns avec les autres, et le composé ainsi obtenu, qui contient aussi bien un groupe isocyanate libre qu'un groupe libre réactif vis-à-vis de groupes isocyanates, est soumis à une réaction intermoléculaire pour donner un oligo- ou un poly-uréthane.

2. Procédé pour la préparation d'oligo- et de poly-uréthanes linéaires selon la revendication 1, **caractérisé en ce que** respectivement les groupes de a) et de b) qui réagissent les uns avec les autres sont ceux qui présentent une réactivité supérieure.

3. Procédé pour la préparation d'oligo- et de poly-uréthanes linéaires selon la revendication 1, **caractérisé en ce que** les isocyanates comprenant au moins deux groupes isocyanates a) sont choisis parmi le groupe comprenant le 2,4-toluylènediisocyanate, le 2,6-toluylènediisocyanate, le 4,4'-diphénylméthanediisocyanate, le 2,4'-diphénylméthanediisocyanate, le 3-alkyl-4,4'-diphénylméthanediisocyanate dans lequel le groupe alkyle contient de 1 à 10 atomes de carbone, le 1,3- et le 1,4-phénylènediisocyanate, le 1,5-naphtylènediisocyanate, le tolidinediisocyanate, le diphényldiisocyanate, le tétraméthylénediisocyanate, l'hexaméthylènediisocyanate, le dodécyldiisocyanate, l'ester alkylique de lysinediisocyanate dans lequel le groupe alkyle contient de 1 à 10 atomes de carbone, l'isophoronediisocyanate, le 2-butyl-2-éthyl-pentaméthylènediisocyanate, le 2-isocyanatopropylcyclohexylisocyanate, le 4-méthylcyclohexane-1,3-diisocyanate, le 4,4'- et le 2,4'-méthylènebis(cyclohexyl)diisocyanate, le 1,3- ou le 1,4-bis(isocyanatométhyl)-cyclohexane ou parmi leurs mélanges.

4. Procédé pour la préparation d'oligo- et de poly-uréthanes linéaires selon la revendication 1, **caractérisé en ce que** les composés b) comprenant deux groupes réactifs vis-à-vis de groupes isocyanates, représentent des composés comprenant un groupe hydroxyle primaire et un groupe hydroxyle secondaire ou tertiaire ou bien un groupe mercapto primaire et un groupe mercapto secondaire ou tertiaire, un groupe amino primaire et un groupe amino secondaire, un groupe hydroxyle et un groupe mercapto, un groupe mercapto et un groupe amino ou encore un groupe hydroxyle et un groupe amino dans la molécule.

5. Procédé pour la préparation d'oligo- et de poly-uréthanes linéaires selon la revendication 1, **caractérisé en ce qu'**on fait réagir 1 mole d'un isocyanate a) avec 1 mole d'un composé b) comprenant deux groupes réactifs vis-à-vis d'isocyanates qui présentent des réactivités différentes, et le composé ainsi obtenu, qui contient aussi bien un groupe isocyanate libre qu'un groupe libre réactif vis-à-vis de groupes isocyanates, est soumis à une réaction intermoléculaire pour donner un oligo- ou un poly-uréthane.

6. Oligo- et poly-uréthanes linéaires que l'on peut préparer conformément à l'une quelconque des revendications 1 à 5.

7. Utilisation des oligo- et des poly-uréthanes linéaires selon la revendication 6 à titre de matière thermoplastique.

8. Utilisation des oligo- et des poly-uréthanes linéaires selon la revendication 6 à titre de composants pour la préparation de polyuréthanes.

9. Utilisation des oligo- et des poly-uréthanes linéaires selon la revendication 6 à titre de composants pour la préparation de polymères de polyaddition ou de polycondensation.

10. Utilisation des oligo- et des poly-uréthanes linéaires selon la revendication 6 à titre de composants pour la préparation de polymères en forme d'étoile ou en forme de peigne.

11. Utilisation des oligo- et des poly-uréthanes linéaires selon la revendication 6 à titre d'agents de transition de phase, d'adjuvants rhéologiques, d'agents thixotropes ou de réactifs de nucléation.
